# EUROPEAN PATENT SPECIFICATION

(11) **EP 1 895 296 B1**
(45) Date of publication and mention of the grant of the patent: **24.07.2013**
(21) Application number: 06746538.5
(22) Date of filing: 17.05.2006
(51) Int. Cl.: G01N 27/62, H01J 41/10, H01J 49/00, G01L 21/30, G01M 3/20

(54) **MASS SPECTROMETER AND METHOD OF USING THE SAME**
MASSENSPEKTROMETER UND VERWENDUNG DAVON
SPECTROMETRE DE MASSE ET UTILISATION DE CE SPECTROMETRE

(30) Priority: 23.05.2005 JP 2005149626
(43) Date of publication of application: 05.03.2008
(73) Proprietor: ULVAC, INC., Chigasaki-shi, Kanagawa 253-8543 (JP)
(72) Inventor: Nakajima, Toyoaki, Chigasaki-shi, Kanagawa 2538543 (JP); Yoshizawa, Hideki, Chigasaki-shi, Kanagawa 2538543 (JP)
(74) Representative: Eisenführ, Speiser & Partner
(86) International application number: PCT/JP2006/309835
(87) International publication number: WO 2006/126434

(56) References cited:
- WO-A2-2004/065920
- JP-A- 02 307 043
- JP-A- 03 037 562
- JP-A- 05 087 668
- JP-A- 10 142 198
- JP-A- 58 113 830
- JP-A- 61 130 485
- JP-A- 2002 014 080
- US-A1- 2004 191 949

## Description

### [TECHNICAL FIELD]

The present invention relates to a mass spectrometer and a method of using the mass spectrometer.

Priority is claimed on Japanese Patent Application No. 2005-149626, filed on May 23, 2005.

### [BACKGROUND ART]

A variety of vacuum apparatuses are used in manufacturing semiconductor devices or flat panel displays. A quadrupolar mass spectrometer is used to perform process management of the vacuum apparatuses (for example, see Patent Document 1). The mass spectrometer is an apparatus for measuring partial pressures of various materials contained in gas to be analyzed with respect to a mass-to-charge ratio (mass number/charge number).

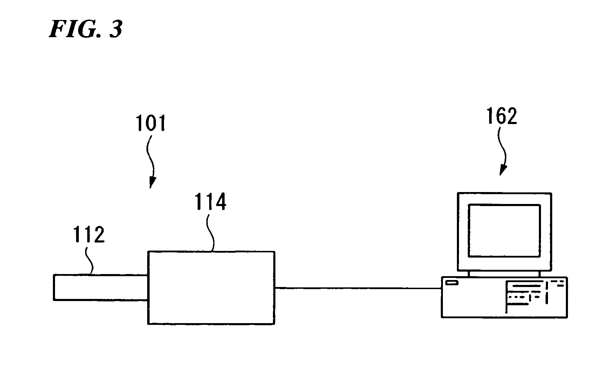

FIG 3 is a diagram illustrating a schematic configuration of a known mass spectrometer. A mass spectrometer 101 has a measurement unit 112 which introduces gas to be analyzed and measures partial pressures with respect to a mass-to-charge ratio thereof and an electrical system unit 114 which electrically controls the measurement unit. The measurement unit 112 is disposed inside a chamber of a vacuum apparatus and the electrical system unit 114 is disposed outside the chamber of the vacuum apparatus. The mass spectrometer 101 is connected to a PC 162 for controlling the vacuum apparatus.

In the case in which the process management of the vacuum apparatus is performed by the use of the mass spectrometer, the mass spectrometer 101 is driven by the PC 162 for controlling the vacuum apparatus, an inner gas is introduced into the vacuum apparatus in operation to measure partial pressures with respect to the mass-to-charge ratio, and the measurement result is output to the PC 162 to display the measurement result. The kinds and amounts of the materials contained in the inner gas are checked from the displayed measurement result and it is determined whether a predetermined process is performed by the vacuum apparatus.
JP 10142198 A comprises a residual gas monitor comprising an analysis Primary detecting element, a 1st controlling circuit part, a detectable display device and a and controlling circuit part that is connected to the 1st controlling circuit part by means of a communication part and a telecommunication cable. [Patent Document 1] Japanese Unexamined Patent Application, First Publication No. H07-307301

### [Disclosure of the Invention]

### [Problems to be Solved by the Invention]

The mass spectrometer is also used for a pinhole inspection of the vacuum apparatus. In the pinhole inspection of the vacuum apparatus, an air leakage inspection for detecting the existence of a pinhole and He leakage inspection for detecting a position of the pinhole are sequentially carried out.

At the time of performing the air leakage inspection of the vacuum apparatus, the inside of the vacuum apparatus is evacuated. Then, the mass spectrometer 101 is driven by the PC 162 to control the vacuum apparatus, the inner gas of the vacuum apparatus is analyzed, and the analysis result is displayed on the PC 162. A graph in which the horizontal axis denotes the mass-to-charge ratio and the vertical axis denotes the partial pressure is displayed on the PC 162. The ratio of a partial pressure of nitrogen gas having a mass-to-charge ratio of 28 and a partial pressure of oxygen gas having a mass-to-charge ratio of 32 is manually calculated by an operator according to the graph. In the case in which the partial pressure ratio is almost 4:1, it is determined that air leaks through a pinhole.

In the case in which it is determined from the air leakage inspection that a pinhole exists, the He leakage inspection is carried out to detect the position of the pinhole. At the time of performing the He leakage inspection, He gas is emitted to a specific position on the outer surface of the vacuum apparatus. Then, the mass spectrometer 101 is driven by the PC 162 for controlling the vacuum apparatus, the inner gas of the vacuum apparatus is measured, and the measurement result is displayed on the PC 162. The partial pressure of He gas contained in the inner gas is checked from the displayed measurement result to determine whether the He gas leaks through the pinhole. The He gas is emitted to various positions of the outer surface of the vacuum apparatus and the above-mentioned process is repeated every time, thereby detecting the position of the pinhole.

However, the calculation of the partial pressure ratio in the air leakage inspection is troublesome and a calculation error may occur. In the He leakage inspection, the chamber of the vacuum apparatus to which the He gas is emitted is positioned apart from the PC 162 for controlling the vacuum apparatus, operating the mass spectrometer, and displaying the measurement result. Accordingly, an operator needs to come and go several times between the chamber of the vacuum apparatus and the PC for controlling and the He leakage inspection requires a long time.

To overcome the above problems, it is an object of the invention to provide a mass spectrometer and a method of using the mass spectrometer which can efficiently perform a variety of inspections.

### [Means for Solving the Problems]

In order to achieve the above-mentioned object, according to an aspect of the invention, there is provided a mass spectrometer which is mounted on a wall portion of a chamber and analyzes gas to be analyzed existing in the chamber. The mass spectrometer includes: a measurement unit which is inserted into the chamber at the time of mounting on the chamber and measures each partial pressure of gaseous components in the gas to be analyzed with respect to mass-to-charge ratios; a control unit which is disposed outside of the wall portion at the time of mounting on the chamber and manipulates the measurement unit; and a display unit which is disposed outside of the wall portion at the time of mounting on the chamber and displays the measurement result of the measurement unit. Here, the control unit and the display unit are disposed in an electrical system unit which is integrally connected to the measurement unit and controls the measurement unit, whereby an operator can both manipulate the mass spectrometer by the use of the control unit and check the measurement results in the vicinity of the position of the gas to be analyzed.

According to this configuration, since the mass spectrometer can be manipulated and the measurement result can be checked in the vicinity of the position of the gas to be analyzed, it is possible to efficiently perform a variety of inspections. Particularly, it is possible to efficiently perform a leakage inspection of the vacuum apparatus after maintenance thereof.

According to this configuration, it is possible to dispose the control unit and the display unit in the vicinity of the measurement unit at low cost.

It is preferable that the electrical system unit change the displays of the partial pressures with respect to plural kinds of mass-to-charge ratios on the display unit.

According to this configuration, since only the necessary measurement result can be simply confirmed, it is possible to efficiently perform a variety of inspections.

It is preferable that the electrical system unit display a ratio of the partial pressure of nitrogen gas having a mass-to-charge ratio of 28 and the partial pressure of oxygen gas having a mass-to-charge ratio of 32.

It is also preferable that the electrical system unit include an output unit for outputting to an external device the ratio of the partial pressure of nitrogen gas having a mass-to-charge ratio of 28 and the partial pressure of oxygen gas having a mass-to-charge ratio of 32.

According to these configurations, since the partial pressure ratio of nitrogen gas and oxygen gas can be checked without performing a manual calculation, it is possible to efficiently perform an air leakage inspection.

On the other hand, according to another aspect of the invention, there is provided a method of using the above-mentioned mass spectrometer, the method performing a leakage inspection of the chamber. The method includes the steps of: mounting the mass spectrometer on the chamber; evacuating the inside of the chamber; driving the mass spectrometer to measure partial pressures of plural kinds of gaseous components in the gas to be analyzed and displaying the ratio of the partial pressures on the display unit; and determining a leakage of the chamber according to the magnitude of the ratios.

According to this configuration, since the mass spectrometer can be manipulated and the measurement result can be checked in the vicinity of the position of the gas to be analyzed, it is possible to efficiently perform a variety of inspections, particularly, a leakage inspection of the chamber of the vacuum apparatus after maintenance thereof.

In the case in which it is determined that the leakage of the chamber exists by the above method of using the mass spectrometer, in the method of using the mass spectrometer for detecting a position of a pinhole generated in the chamber, it is preferable that the method have the steps of: evacuating the inside of the chamber; emitting an inspection gas to a specific portion of an outer wall of the chamber; driving the mass spectrometer to measure a partial pressure of the inspection gas and displaying the partial pressure on the display unit; and determining whether the pinhole is generated in the specific portion of the outer wall according to the magnitude of the partial pressure.

With this configuration, it is not necessary to come and go between the chamber of the vacuum apparatus and the controlling PC several times, since the mass spectrometer can be manipulated and the measurement result can be checked in the vicinity of the position of the chamber to which the inspection gas is emitted: therefore, it is possible to efficiently detect a position of a pinhole.

### [Effects of the Invention]

According to the mass spectrometer and the method of using the mass spectrometer of the invention, since the mass spectrometer can be manipulated and the measurement result can be checked in the vicinity of the position of the gas to be analyzed, it is possible to efficiently perform a leakage inspection of the vacuum apparatus after the maintenance, as well as to efficiently perform the process management of the vacuum apparatus in operation.

### [Brief Description of the Drawings]

FIG 1 is a side view showing a mass spectrometer according to an embodiment of the present invention.
FIG 2 is a diagram showing a schematic configuration of a vacuum apparatus mounted with the mass spectrometer according to the embodiment of the present invention.
FIG 3 is a diagram showing a schematic configuration of a known mass spectrometer.

### [Brief Description of the Reference]

- 1:: MASS SPECTROMETER
- 3:: WIRE (OUTPUT UNIT)
- 12:: MEASUREMENT UNIT
- 14:: ELECTRICAL SYSTEM UNIT
- 16:: DISPLAY UNIT
- 30:: CONTROL UNIT
- 50:: VACUUM APPARATUS
- 52:: CHAMBER

### [Best Mode for Carrying Out the Invention]

Hereinafter, embodiments of the invention will be described with reference to the drawings. Throughout the figures used in the following description, layers and members are scaled to a perceivable size.

### (Mass Spectrometer)

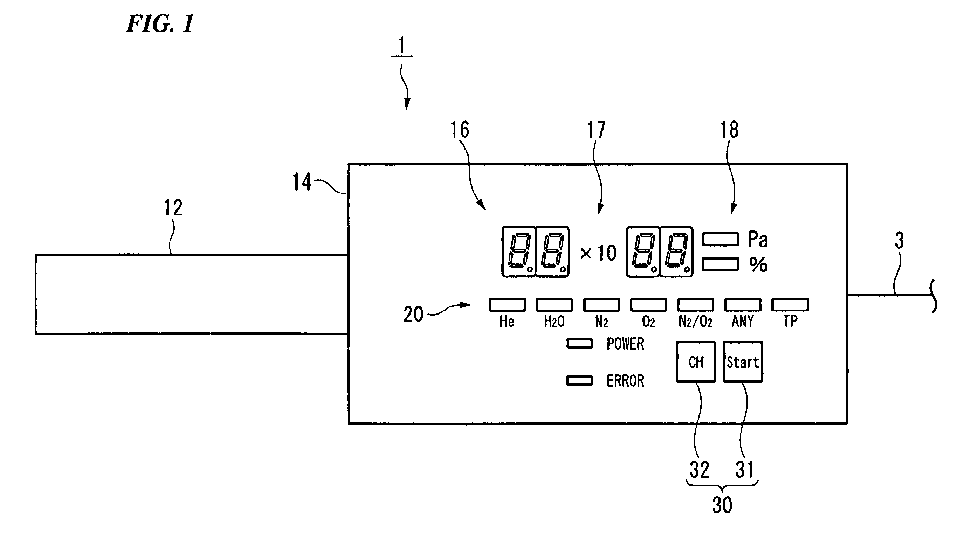

FIG 1 is a side view of a mass spectrometer according to an embodiment of the present invention. A mass spectrometer 1 according to this embodiment includes a measurement unit 12 and an electrical system unit 14, and a display unit 16 and a control unit 30 are provided in the electrical system unit 14.

A magnetic deflecting mass spectrometer or a quadrupolar mass spectrometer exists as the mass spectrometer. In this embodiment, a transducer type quadrupolar mass spectrometer is exemplified and described. The quadrupolar mass spectrometer measures kinds of gases existing in the vacuum and partial pressures of the gases and includes an ion source section, a quadrupole section, and an ion detecting section (which are all not shown) inside the measurement unit 12. In a theoretical mass analysis, first, a gas to be analyzed is introduced from an end of the measurement unit 12. Next, the introduced gas molecules are ionized by thermoelectrons generated from a filament of the ion source section. Then, an electric field is applied to four rods in the quadrupole section by the use of DC voltage and AC voltage and only ions having a specific mass-to-charge ratio (mass number/charge number) among the incident ions from the ion source section are transmitted. Thereafter, the ion detecting section detects the ions passing through the quadrupole section as ion current. Then, the electric field applied to the quadrupole section is swept, the ion current is measured with respect to the mass-to-charge ratio, and the kinds and the partial pressures of the gases are measured.

The electrical system unit 14 for controlling the measurement operation of the measurement unit 12 is integrally connected to the measurement unit 12. The electrical system unit 14 is provided with the control unit 30 and the display unit 16 for displaying the measurement result. That is, the measurement unit 12, the control unit 30, and the display unit 16 are disposed adjacent to each other. The control unit 30 is provided with a measurement start button 31 (Start) and a display change button 32 (CH). In the case in which the measurement start button 31 is pressed, the filament of the ion source section of the measurement unit 12 is supplied with electricity and the scan measurement of the partial pressures with respect to the mass-to-charge ratio of 1 to 100 is started. Thereafter, an intermittent measurement process is performed every predetermined sampling time.

The display unit 16 is constituted from a numerical display section 17, a unit display section 18, and a detail display section 20. In the case in which the numerical display section 17 displays the partial pressures, a lamp "Pa" of the unit display section 18 is lighted. In the case in which the numerical display section 17 displays the partial pressure ratio, a lamp "%" of the unit display section 18 is lighted. In addition, a lamp "POWER" indicating a power supply state and a lamp "ERROR" lighted In the case in which a failure of the filament or a failure of a circuit is detected are provided.

A plurality of lamps indicating display details of the display unit 16 are provided in the detail display section 20. In the case in which the display change button 32 of the control unit 30 is pressed, the display details of the display unit 16 are switched and the lamps corresponding to the display details are lighted.

A lamp "He" indicates that a partial pressure corresponding to the mass-to-charge ratio (=4) of He gas (i.e., inspection gas) is displayed, which is used for the He leakage inspection of the vacuum apparatus. A lamp "H₂O" indicates that a partial pressure corresponding to the mass-to-charge ratio (=18) of steam is displayed, which is used for the cooling water leakage inspection of the vacuum apparatus. A lamp "N₂/O₂" indicates that a ratio of the partial pressure of N₂ (nitrogen) gas and the partial pressure of O₂ (oxygen) gas is displayed, which is used for the air leakage inspection of the vacuum apparatus. An lamp "ANY" indicates that the partial pressure of a specific gas registered in advance is displayed, which is used for the introduction gas leakage inspection of the vacuum apparatus. A specific gas having a mass-to-charge ratio of 44 is registered as a default. In addition, an lamp "N₂" indicating that the partial pressure corresponding to the mass-to-charge ratio of N₂ gas (=28) is displayed, an lamp "O₂" indicating that the partial pressure corresponding to the mass-to-charge ratio of O₂ gas (=32) is displayed, and a lamp "TP" indicating that the total pressure of the gas to be analyzed is displayed are provided.

The mass spectrometer 1 is manipulated by the use of the control unit 30 and also manipulated from the outside through a wiring (i.e., output unit) 3. The measurement result is indicated on the display unit 16 and also can be converted into a voltage signal and output externally through the wiring 3. At this time, 0 to 100% of the ratio of the partial pressure of the nitrogen gas and the partial pressure of the oxygen gas can be assigned to correspond to a voltage of 0 to 10 V and output; thus, it is possible to monitor a failure such as air leakage in operation as well as at the time of maintenance. The measurement result may be output by a relay or a digital signal only In the case in which the partial pressure of various gases or the partial pressure ratio is larger than an allowable value externally; the measurement result is not necessary to be output entirely.

### (Method of Using Mass Spectrometer)

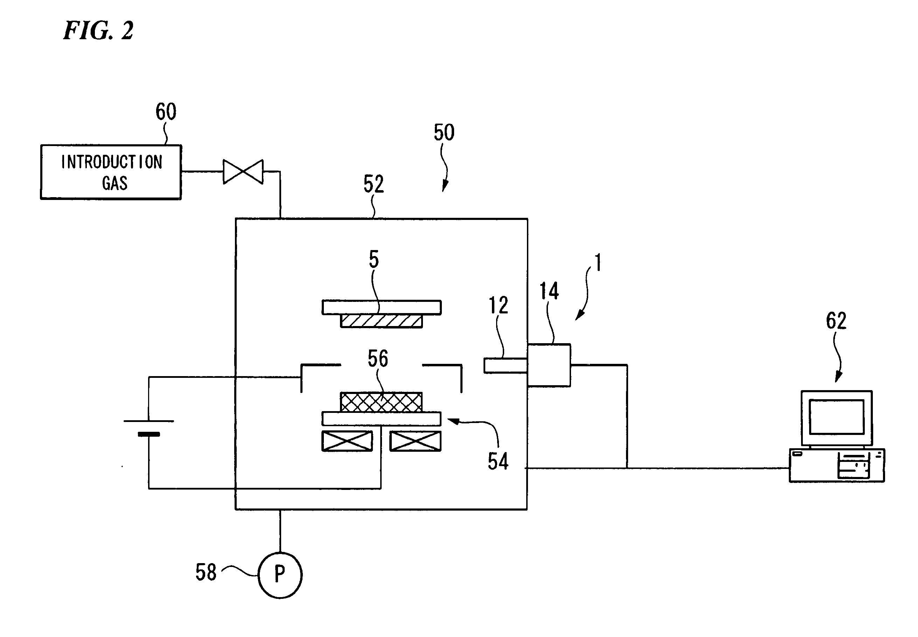

Next, a method of using the mass spectrometer according to this embodiment will be described with reference to FIGS. 1 and 2.

FIG 2 is a diagram illustrating a schematic configuration of the vacuum apparatus mounted with the mass spectrometer according to this embodiment. A DC magnetron sputtering apparatus is exemplified and described as a vacuum apparatus 50 mounted with the mass spectrometer 1. The DC magnetron sputtering apparatus (hereinafter, referred to as "sputtering apparatus") includes a magnetron electrode 54 in a chamber 52. The magnetron electrode 54 serves to apply a magnetic field to the surface of a target 56 disposed on the electrode and to generate high-density plasma. The chamber 52 is evacuated by a vacuum pump 58 and Ar gas is supplied to the chamber 52 from an introduction gas supply unit 60. Accordingly, Ar ions collide with the target 56 and the sputtered target material is attached to an opposed substrate 5 to form a film thereon. The operation of the sputtering apparatus 50 is controlled by a controlling PC (i.e., personal computer) 62 spaced from the chamber 52.

The mass spectrometer 1 according to this embodiment is mounted on a sidewall portion of the chamber 52. Specifically, the measurement unit 12 of the mass spectrometer 1 is disposed inside the chamber 52 and the electrical system unit 14 is disposed outside the chamber 52. In this embodiment, the control unit of the measurement unit 12 and the display unit for displaying the measurement result are disposed in the electrical system unit 14 of the mass spectrometer 1. In addition, the mass spectrometer 1 is connected to the controlling PC 62 for the vacuum apparatus 50 and thus the manipulation of the measurement unit 12 and the display of the measurement result can be also performed by the use of the controlling PC 62.

A method of various inspections of the vacuum apparatus 50 by the use of the mounted mass spectrometer 1 will be described below.

### (Process Management Method)

Here, a method of performing process management of the vacuum apparatus 50 will be described. First, the vacuum apparatus 50 is driven to start a film forming process. Next, the mass spectrometer 1 is driven by the use of the controlling PC 62 to start the measurement of the inner gas of the chamber 52. The measurement result is converted into a voltage signal and output to the controlling PC 62. The controlling PC 62 displays a graph in which the horizontal axis denotes the mass-to-charge ratio and the vertical axis denotes the partial pressure. Next, the kinds and amounts of materials contained in the inner gas are checked from the measurement result. That is, it is checked whether products of a normal process are contained therein by predetermined amounts or whether impurities having a negative influence on the products are contained in a large amount. The check is performed by an operator visually or by a program executed by the controlling PC 62. Such process management is periodically performed to the vacuum apparatus 50 in operation.

In this way, since the measurement result is displayed in the electrical system unit 14 and the measurement result is converted into a voltage signal and output to the controlling PC 62, it is possible to perform the process management by the use of the controlling PC 62, similarly to the prior arts.

The measurement result is not necessary to be output entirely to the controlling PC 62, but may be output to the controlling PC 62 by a relay or a digital signal only when the partial pressure of a specific gas is larger than an allowable value externally. In this case, the controlling PC 62 displays the measurement result and alarms an operator. Accordingly, it is possible to further efficiently perform the process management.

### (Pinhole Inspection)

Next, a method of performing a pinhole inspection to the vacuum apparatus 50 will be described. In the case in which a pinhole is generated in the chamber 52 with the maintenance of the chamber 52 of the vacuum apparatus 50, the performance of the vacuum apparatus is deteriorated; thus, the pinhole inspection is performed after the maintenance of the vacuum apparatus 50. As the pinhole inspection, the air leakage inspection of detecting the existence of a pinhole and the He leakage inspection of detecting a position of the pinhole are sequentially performed.

In the air leakage inspection of the vacuum apparatus 50, the mass spectrometer 1 is mounted on the chamber 52 and the inside of the chamber 52 is evacuated.

Next, the mass spectrometer 1 is driven to measure the inner gas of the chamber 52 and the measurement result is displayed. The driving of the mass spectrometer and the display of the measurement result are performed by the electrical system unit 14 of the mass spectrometer 1. Specifically, in the electrical system unit 14 shown in FIG. 1, first, the measurement start button 31 of the control unit 30 is pressed to start the measurement; subsequently, the display change button 32 is pressed to light the lamp "N₂/ O₂" of the detail display section 20. Accordingly, the ratio of the partial pressure of nitrogen gas and the partial pressure of oxygen gas which are measured is displayed on the display unit 16. In the case in which the ratio is about 4.0 (400%), it is determined that the air leakage through a pinhole occurs in the chamber 52 shown in FIG 2.

In this way, since the ratio of the partial pressure of the nitrogen gas and the partial pressure of the oxygen gas can be checked by only pressing the display change button 32, an operator's manual calculation of the partial pressure ratio is not necessary; thus, it is possible to efficiently perform the air leakage inspection of the vacuum apparatus 50.
In the case in which it is determined from the air leakage inspection that the pinhole is generated, the He leakage inspection is performed in order to detect the position of the pinhole. In the He leakage inspection, the inside of the chamber 52 is evacuated. The He gas is emitted to a specific portion on the outer wall of the chamber 52. Specifically, the He gas (i.e., inspection gas) is emitted to welded portions or movable portions of the chamber 52 having high probability that a pinhole exists. Next, the mass spectrometer 1 is driven to measure the inner gas of the chamber 52 and the measurement result is displayed. The driving of the mass spectrometer and the display of the measurement result are performed by the electrical system unit 14 of the mass spectrometer 1. Specifically, in the electrical system unit 14 shown in FIG 1, first, the measurement start button 31 of the control unit 30 is pressed to start the measurement; subsequently, the display change button 32 is pressed to light the lamp "He" of the detail display section 20. Accordingly, the measured partial pressure of the He gas is displayed on the display unit 16; subsequently, it is determined from the magnitude of the partial pressure whether the He gas leaks through the pinhole. Then, it is possible to detect the position of the pinhole by repeating the above-mentioned process every time the He gas is emitted to various positions on the outer wall of the chamber 52 shown in FIG 2.

In this way, since the mass spectrometer can be manipulated and the measurement result can be checked in the vicinity of the chamber 52 to which the He gas for inspection is emitted, it is not necessary to come and go between the chamber of the vacuum apparatus and the controlling PC several times, unlike the past case. Accordingly, it is possible to efficiently detect a position of a pinhole.

### (Introduction Gas Leakage Inspection)

A method of performing an introduction gas leakage inspection of the vacuum apparatus 50 will be now described. With the maintenance of the vacuum apparatus 50, the introduction gas from the introduction gas supply unit 60 to the chamber 52 may leak; therefore, the introduction gas leakage inspection is performed after the maintenance of the vacuum apparatus 50.

In the introduction gas leakage inspection of the vacuum apparatus 50, first, the inside of the chamber 52 is evacuated. Next, the mass spectrometer is driven to measure the inner gas of the chamber 52 and the measurement result is displayed. The driving of the mass spectrometer and the display of the measurement result are performed by the electrical system unit 14 of the mass spectrometer 1. Specifically, in the electrical system unit 14 shown in FIG 1, first, the measurement start button 31 of the control unit 30 is pressed to start the measurement; subsequently, the display change button 32 is pressed to light the lamp "ANY" of the detail display section 20. The mass-to-charge ratio of the introduction gas is registered in advance in the specific gas button 24. Accordingly, the measured partial pressure of the introduction gas is displayed on the display unit 16. It is determined from the magnitude of the partial pressure whether the introduction gas to the chamber 52 shown in FIG 2 leaks.

### (Cooling Water Leakage Inspection)

A method of performing a cooling water leakage inspection of the vacuum apparatus 50 will be now described. With the maintenance of the vacuum apparatus 50, the cooling water from a cooling water pipe (not shown) of the vacuum apparatus 50 to the chamber 52 may leak. Accordingly, the cooling water leakage inspection is performed after the maintenance of the vacuum apparatus 50.

In the cooing water leakage inspection of the vacuum apparatus 50, first, the inside of the chamber 52 is evacuated. Next, the mass spectrometer is driven to measure the inner gas of the chamber 52 and the measurement result is displayed. The driving of the mass spectrometer and the display of the measurement result are performed by the electrical system unit 14 of the mass spectrometer 1. Specifically, in the electrical system unit 14 shown in FIG. 1, first, the measurement start button 31 of the control unit 30 is pressed to start the measurement; subsequently, the display change button 32 is pressed to light the lamp "H₂O" of the detail display section 20. Accordingly, the measured partial pressure of steam is displayed on the display unit 16; subsequently, it is determined from the magnitude of the partial pressure whether the cooling water to the chamber 52 shown in FIG. 2 leaks.

The air leakage inspection, the introduction gas leakage inspection, and the cooling water leakage inspection can be simultaneously performed. Specifically, the inside of the chamber 52 is evacuated; subsequently, the mass spectrometer is driven to measure the inner gas of the chamber 52. A scanning measurement of the partial pressure with respect to the mass-to-charge ratio of 1 to 100 is performed. The measurement result is displayed by repeatedly pressing the display change button 32 shown in FIG 1 to sequentially light the lamp "N₂/O₂", the lamp "H₂O", and the lamp "ANY" of the detail display section 20. Accordingly, the ratio of the partial pressure of the N₂ gas and the partial pressure of the O₂ gas, the partial pressure of steam, and the partial pressure of the introduction gas which are measured are sequentially displayed. As a result, it is possible to efficiently perform the air leakage inspection, the introduction gas leakage inspection, and the cooling water leakage inspection.

As described above in detail, the mass spectrometer according to this embodiment has a configuration in which the control unit of the measurement unit and the display unit for the measurement result are disposed close to the measurement unit for measuring the partial pressure with respect to the mass-to-charge ratio. According to this configuration, it is possible to efficiently perform a variety of inspections of the vacuum apparatus, since the manipulation of the mass spectrometer can be performed and the measurement result can be checked in the vicinity of the gas to be analyzed. A leakage inspection of the vacuum apparatus after maintenance thereof can also be performed efficiently, as well as the process management of the vacuum apparatus in operation; therefore, it is possible to shorten the time until the vacuum apparatus is started after the maintenance.

### [Industrial Applicability]

The invention can be suitably used to efficiently perform a variety of process managements or inspections of a vacuum apparatus.

## Claims

1. A mass spectrometer (1) which is mounted on a wall portion of a chamber (52) and analyzes a gas to be analyzed existing in the chamber (52), the mass spectrometer (1) comprising:
a measurement unit (12) which is inserted into the chamber (52) at the time of mounting the mass spectrometer (1) on the chamber (52) and measures each partial pressure of gaseous components in the gas to be analyzed with respect to mass-to-charge ratios;
a control unit (30) which is disposed outside of the wall portion at the time of mounting the mass spectrometer (1) on the chamber (52) and is used to manipulate the measurement unit (12); and
a display unit (16) which is disposed outside of the wall portion at the time of mounting the mass spectrometer (1) on the chamber (52) and displays a measurement result of the measurement unit (12),
**characterized in that**
the control unit (30) and the display unit (16) are disposed in an electrical system unit (14) which is connected integrally to the measurement unit (12) and controls the measurement unit (12), whereby an operator can both manipulate the mass spectrometer (1) by the use of the control unit (30) and check the measurement results in the vicinity of the position of the gas to be analyzed.

2. The mass spectrometer (1) according to claim 1, wherein the electrical system unit (14) switches displays on the display unit (16) of the partial pressures with respect to plural kinds of mass-to-charge ratios.

3. The mass spectrometer (1) according to claim 1, wherein the electrical system unit (14) makes the display unit (16) display a ratio of the partial pressure of nitrogen gas having a mass-to-charge ratio of 28 and the partial pressure of oxygen gas having a mass-to-charge ratio of 32.

4. The mass spectrometer (1) according to claim 1, wherein the electrical system unit (14) includes an output unit (3) for outputting to an external device a ratio of the partial pressure of nitrogen gas having mass-to-charge ratio of 28 and the partial pressure of oxygen gas having a mass-to-charge ratio of 32.

5. A method of using the mass spectrometer (1) according to claim 1, the method performing a leakage inspection of the chamber (52), the method comprising the steps of:
mounting the mass spectrometer (1) on the chamber (52);
evacuating the inside of the chamber (52);
driving the mass spectrometer to measure partial pressures of plural kinds of gaseous components in the gas to be analyzed and displaying a ratio of the partial pressures on the display unit (16); and
determining a leakage of the chamber (52) according to the magnitude of the ratio.

6. A method of using the mass spectrometer (1) according to claim 1 for detecting a position of a pinhole generated in the chamber (52), the method comprising the steps of:
evacuating the inside of the chamber (52);
emitting an inspection gas to a specific portion of an outer wall of the chamber (52);
driving the mass spectrometer (1) to measure partial pressures of inspection gas and displaying the partial pressure on the display unit (16); and
determining whether the pinhole is generated in the specific portion of the outer wall according to the magnitude of the partial pressure.

## Patentansprüche

1. Massenspektrometer (1), das an einem Wandabschnitt einer Kammer (52) angebracht ist und ein zu analysierendes Gas, welches in der Kammer (52) vorhanden ist, analysiert, wobei das Massenspektrometer (1) umfasst:
eine Messeinheit (12), die zu der Zeit, zu der das Massenspektrometer (1) an der Kammer (52) angebracht ist, in die Kammer (52) eingeführt ist und jeweils Partialdrücke von gasförmigen Komponenten in dem zu analysierenden Gas in Bezug auf Masse-zu-Ladung-Verhältnisse misst;
eine Steuereinheit (30), die zu der Zeit, zu der das Massenspektrometer (1) an der Kammer (52) angebracht ist, außerhalb des Wandabschnitts angeordnet ist und verwendet wird, die Messeinheit (12) zu betätigen; und
eine Anzeigeeinheit (16), die zu der Zeit, zu der das Massenspektrometer (1) an der Kammer (52) angebracht ist, außerhalb des Wandabschnitts angeordnet ist und ein Messergebnis der Messeinheit (12) anzeigt,
**dadurch gekennzeichnet, dass**
die Steuereinheit (30) und die Anzeigeeinheit (16) in einer elektrischen Systemeinheit (14) angeordnet sind, die integral mit der Messeinheit (12) verbunden ist und die Messeinheit (12) steuert, wobei ein Anwender sowohl das Massenspektrometer (1) mittels der Steuereinheit (30) betätigen kann als auch die Messergebnisse in der Nähe der Position des zu analysierenden Gases prüfen kann.

2. Massenspektrometer (1) nach Anspruch 1, wobei die elektrische Systemeinheit (14) Anzeigen der Partialdrücke auf der Anzeigeeinheit (16) in Bezug auf mehrere Arten von Masse-zu-Ladung-Verhältnissen umschaltet.

3. Massenspektrometer (1) nach Anspruch 1, wobei die elektrische Systemeinheit (14) die Anzeigeeinheit (16) veranlasst, ein Verhältnis des Partialdrucks von Stickstoffgas, welches ein Masse-zu-Ladung-Verhältnis von 28 aufweist, und des Partialdrucks von Sauerstoffgas, welches ein Masse-zu-Ladung-Verhältnis von 32 aufweist, anzuzeigen.

4. Massenspektrometer (1) nach Anspruch 1, wobei die elektrische Systemeinheit (14) eine Ausgabeeinheit (3) zum Ausgeben eines Verhältnisses des Partialdrucks von Stickstoffgas, welches ein Masse-zu-Ladung-Verhältnis von 28 aufweist, und des Partialdrucks von Sauerstoffgas, welches ein Masse-zu-Ladung-Verhältnis von 32 aufweist, zu einem externen Gerät beinhaltet.

5. Verfahren zum Verwenden des Massenspektrometers (1) nach Anspruch 1, wobei das Verfahren eine Undichtigkeitsprüfung der Kammer (52) durchführt, wobei das Verfahren die Schritte umfasst:
Anbringen des Massenspektrometers (1) an der Kammer (52);
Evakuieren des Inneren der Kammer (52);
Betreiben des Massenspektrometers, um Partialdrücke von mehreren Arten von gasförmigen Komponenten in dem zu analysierenden Gas zu messen und ein Verhältnis der Partialdrücke auf der Anzeigeeinheit (16) anzuzeigen; und
Bestimmen einer Undichtigkeit der Kammer (52) entsprechend der Größe des Verhältnisses.

6. Verfahren zum Verwenden des Massenspektrometers (1) nach Anspruch 1 zum Detektieren einer Position eines in der Kammer (52) erzeugten Nadelloches, wobei das Verfahren die Schritte umfasst:
Evakuieren des Inneren der Kammer (52);
Abgeben eines Inspektionsgases zu einem bestimmten Abschnitt einer äußeren Wand der Kammer (52);
Betreiben des Massenspektrometers (1), um Partialdrücke des Inspektionsgases zu messen und die Partialdrücke auf der Anzeigeeinheit (16) anzuzeigen; und
Bestimmen, ob das Nadelloch in dem bestimmten Abschnitt der äußeren Wand erzeugt worden ist, entsprechend der Größe des Partialdrucks.

## Revendications

1. Spectromètre (1) de masse, qui est monté sur une partie de paroi d'une chambre (52) et qui analyse un gaz à analyser se trouvant dans la chambre (52), le spectromètre (1) de masse comprenant :
une unité (12) de mesure, qui est insérée dans la chambre (52) au moment du montage du spectromètre (1) de masse sur la chambre (52) et qui mesure chaque pression partielle de constituants gazeux du gaz à analyser en ce qui concerne des rapports masse-à-charge ;
une unité (30) de commande, qui est disposée à l'extérieur de la partie de paroi au moment du montage du spectromètre (1) de masse sur la chambre (52) et qui est utilisée pour manoeuvrer l'unité (12) de mesure ; et
une unité (16) d'affichage, qui est disposée à l'extérieur de la partie de paroi au moment du montage du spectromètre (1) de masse sur la chambre (52) et qui affiche un résultat de mesure de l'unité (12) de mesure ;
**caractérisé en ce que**
l'unité (30) de commande et l'unité (16) d'affichage sont disposées dans une unité (14) de système électrique, qui est intégrée à l'unité (12) de mesure et qui commande l'unité (12) de mesure, de sorte qu'un opérateur peut à la fois manoeuvrer le spectromètre (1) de masse par l'utilisation de l'unité (30) de commande et contrôler les résultats de mesure à proximité de la position du gaz à analyser.

2. Spectromètre (1) de masse suivant la revendication 1, dans lequel l'unité (14) de système électrique commute des affichages sur l'unité (16) d'affichage des pressions partielles en ce qui concerne plusieurs types de rapport masse-à-charge.

3. Spectromètre (1) de masse suivant la revendication 1, dans lequel l'unité (14) de système électrique fait que l'unité (16) d'affichage affiche un rapport de la pression partielle de l'azote gazeux ayant un rapport de masse-à-charge de 28 et de la pression partielle de l'oxygène gazeux ayant un rapport de masse-à-charge de 32.

4. Spectromètre (1) de masse suivant la revendication 1, dans lequel l'unité (14) de système électrique comprend une unité (3) de sortie pour sortir vers un dispositif extérieur un rapport de la pression partielle de l'azote gazeux ayant un rapport de masse-à-charge de 28 et de la pression partielle de l'oxygène gazeux ayant un rapport de masse-à-charge de 32.

5. Procédé d'utilisation du spectromètre (1) de masse suivant la revendication 1, le procédé effectuant une inspection de fuite de la chambre (52), le procédé comprenant les stades de :
montage du spectromètre (1) de masse sur la chambre (52) ;
mise sous vide de l'intérieur de la chambre (52) ;
commande du spectromètre de masse pour mesurer des pressions partielles de plusieurs types de constituants gazeux du gaz à analyser et affichage d'un rapport des pressions partielles sur l'unité (16) d'affichage ; et
détermination d'une fuite de la chambre (52) suivant la valeur du rapport.

6. Procédé d'utilisation du spectromètre (1) de masse suivant la revendication 1 pour détecter une position d'un trou d'épingle produit dans la chambre (52), le procédé comprenant les stades de :
mise sous vide de l'intérieur de la chambre (52) ;
envoi d'un gaz d'inspection vers une partie précise d'une paroi extérieure de la chambre (52) ;
commande du spectromètre (1) de masse pour mesurer des pressions partielles du gaz d'inspection et affichage de la pression partielle sur l'unité (16) d'affichage ; et
détermination du point de savoir si le trou d'épingle est produit dans la partie précise de la paroi extérieure suivant la valeur de la pression partielle.
